# EUROPÄISCHE PATENTANMELDUNG

(11) **EP 0 818 649 A2**
(43) Veröffentlichungstag der Anmeldung: **14.01.1998**
(21) Anmeldenummer: 97111547.2
(22) Anmeldetag: 08.07.1997
(51) Int. Cl.: F16L 33/02

(54) **Einrichtung zum Spannen eines um mindestens einen rohrförmigen Körper geschlungenen, profilierten Bandendes, insbesondere eines Kabelhalters**

(30) Priorität: 10.07.1996 DE 19627831
(71) Anmelder: TRW United-Carr GmbH & Co. KG, 67677 Enkenbach-Alsenborn (DE)
(72) Erfinder: Kraus, Willibald, 67269 Grünstadt (DE)
(74) Vertreter: Eder, Eugen, Dipl.-Ing.

(57) **Zusammenfassung**

Die Erfindung bezieht sich auf eine Einrichtung 1 zum Spannen eines um mindestens einen rohrförmigen Körpers 2 geschlungenen, profilierten Bandelements 3, insbesondere eines Kabelhalters 10, in einem Kopfteil 4, mit mindestens einer Spannvorrichtung 20 mit Schiebeschlitten und Schneidhebel.

Erfindungsgemäß ist die Spannvorrichtung 20 rückseitig einer Montageplatte 30 angeordnet, wobei die Montageplatte 30 einer der Spannvorrichtung 20 zugeordnete Durchtrittsöffnung 31 für ein vorderseitig einzuführendes Bandelements 3 aufweist. Zwischen der Rückseite der Montageplatte 30 und einem Eintrittsbereich der Spannvorrichtung 20 ist mindestens ein bewegliches Einzugselement 15 zum Erfassen und Transportieren des Bandelements 3 angeordnet. Das Einzugselement 15 und ein Betätigungsteil für die Spannvorrichtung 3 sind mit mindestens einem Antrieb 21 und einer Steuereinheit 22 verbunden.

## Beschreibung

Die Erfindung bezieht sich auf eine Einrichtung zum Spannen eines um mindestens einen rohrförmigen Körper geschlungenen, profilierten Bandelements, insbesondere eines Kabelhalters in einem Kopfteil, in welchem ein mit dem profilierten Bandelement zusammenwirkendes federndes Verriegelungselement angeordnet ist, mit mindestens einer Spannvorrichtung mit Schiebeschlitten und Schneidhebel.

Als Stand der Technik ist bereits eine derartige Einrichtung bekannt, in welcher eine Spannvorrichtung Anwendung findet, welche dazu dient, einen an sich bekannten Kabelhalter aus einer Offenstellung in eine Schließstellung mit Umschlingen von rohrförmigen Kabeln zu überführen (DE 42 24 826 A1). Bei dieser bekannten Konstruktion muß das durch den Kopfteil der Spannvorrichtung geschobene Bandende von Hand festgezogen werden, um die zu umschlingenden Körper einwandfrei mit den Kabelhalter zu verbinden. Hierdurch ergibt sich ein erheblicher baulicher und zeitlicher Aufwand.

Aufgabe der vorliegenden Erfindung ist es, eine Einrichtung der eingangs genannten Art zu auszubilden, daß die zeit- und kostenaufwendige manuelle Handhabung entfällt.

Diese Aufgabe wird erfindungsgemäß dadurch gelöst, daß die Spannvorrichtung rückseitig an eine Montageplatte angeordnet ist, daß die Montageplatte eine der Spannvorrichtung zugeordnete Durchtrittsöffnung für ein vorderseitig einzuführendes Bandelement aufweist, daß zwischen der Rückseite der Montageplatte und einem Eintrittsbereich der Spannvorrichtung mindestens ein bewegliches Einzugselement zum Erfassen und Transportieren des Bandelements angeordnet ist und daß das Einzugselement und ein Betätigungsteil für die Spannvorrichtung mit mindestens einem Antrieb und einer Steuereinheit verbunden sind. Hierdurch ergibt sich der Vorteil, daß auf einfache Weise eine manuelle Handhabung beim Durchführen des Schließvorganges eines Kabelhalters nach Umschlingen der zu halternden Gegenstände entfällt.

In vorteilhafter Weiterbildung der Erfindung können rückseitig der Montageplatte mehrere Spannvorrichtungen angeordnet sein, deren zugeordnete Durchtrittsöffnungen den Verlauf eines insbesondere in einem Kraftfahrzeug zu montierenden Kabelstranges entspricht. Hierdurch können in einer Art Vormontage eine Anzahl von Kabelhaltern so an einem Kabelstrang befestigt werden, daß dieser nach Entnahme von der Montageplatte ohne weitere manuelle Handhabung gleich in einem Kraftfahrzeug funktionsgerecht befestigt werden kann. Es ergibt sich hierdurch eine erhebliche Zeit- und Kostenersparnis.

In weiterer Ausgestaltung der Erfindung können die Spannvorrichtungen mit einem gemeinsamen Antrieb und einer gemeinsamen Steuereinheit verbunden sein, wobei durch Betätigen der Steuereinheit und des Antriebs gleichzeitig alle Kabelbänder in die Schließstellung zu bewegen sind.

Als Einzugselement kann ein Walzenpaar Anwendung finden, wobei mindestens eine Walze des Walzenpaares zum Einziehen des Bandelements in die Spannvorrichtung mit dem Antrieb verbunden ist.

In weiterer Ausgestaltung der Erfindung kann die Montageplatte mehrere Durchgangsöffnungen für das jeweilige Bandelement entsprechend dem Verlauf der verschiedenen Kabelstränge aufweisen, wobei die Spannvorrichtungen lösbar an der Rückseite der Montageplatte angeordnet sind. Weiterhin können vorteilhafterweise jeder Durchgangsöffnung rückseitig eine Halterung für eine Spannvorrichtung zugeordnet sein.

Bei einem Kabelband, welches einen mit einem Träger verbindbaren Befestigungsbereich aufweist, besteht erfindungsgemäß die Möglichkeit, daß jeder Durchgangsöffnung ein Abstandshalter vorgeordnet ist, wodurch sich eine Vereinfachung beim Schließvorgang des Kabelstranges ergibt.

Die Erfindung wird nachfolgend anhand eines in der Zeichnung dargestellten Ausführungsbeispiels näher beschrieben. In der Zeichnung zeigen:
- Fig. 1: eine schematische Seitenansicht der erfindungsgemäßen Einrichtung mit vier Spannvorrichtungen in Seitenansicht teils geschnitten,
- Fig. 2: eine perspektivische Ansicht einer Montageplatte mit einem vormontierten Kabelstrang,
- Fig. 3: eine vergrößerte Ansicht eines Kabelstranges im Bereich einer Montageplatte in Schließstellung.

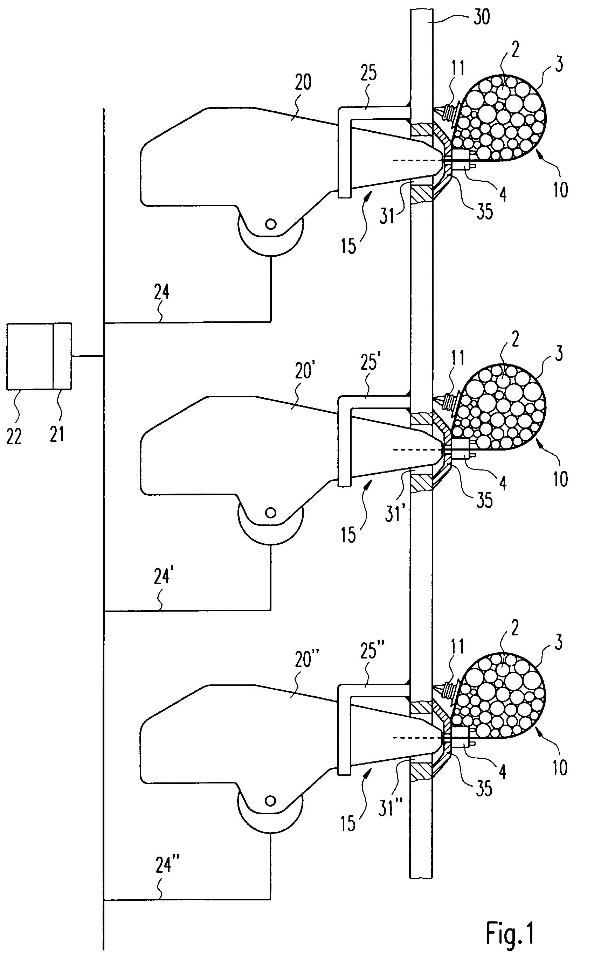

Gemäß Fig. 1 weist eine Einrichtung 1 zum Spannen eines um mindestens einen rohrförmigen Körper 2 geschlungenen, profilierten Bandelements 3 eines Kabelhalters 10 eine Spannvorrichtung 20 auf, welche in an sich bekannter Weise ausgebildet und beispielsweise einen nicht näher dargestellten Schiebeschlitten zum Bewegen des Bandelements und einen Schneidhebel zum Abschneiden des in Schließstellung vorliegenden Bandelements 3 aufweisen kann. Das Bandelement 3 ist Teil des Kabelhalters 10, welcher ein Kopfteil 4 aufweist, in welchen ein mit dem profilierten Bandelement 3 zusammenwirkendes, federndes Verriegelungselement (nicht näher dargestellt) angeordnet ist.

Die Einrichtung 1 weist eine Montageplatte 30 auf, an deren Rückseite mehrere Spannvorrichtungen 20, 20', 20'', 20''' über schematisch dargestellte Halter 25, 25', 25'', 25''' befestigt sind. Jeder an sich bekannten Spannvorrichtung ist eine Durchtrittsöffnung 31, 31', 31'', 31''' zugeordnet, wobei sich zwischen dieser jeweiligen Durchtrittsöffnung und der Spannvorrichtung ein Einzugselement 15, beispielsweise in Form eines Walzenpaares befinden. Von diesem Walzenpaar ist mindestens eine Walze zum Einziehen des Bandelements 3 in die Spannvorrichtung 20 mit einem Antrieb 21 über eine Leitung verbunden. Ein nicht näher dargestelltes Betätigungselement der jeweiligen Spannvorrichtung zum Festspannen des Bandelements 3 in Schließstellung ist jeweils über eine Leitung 24 gleichfalls mit dem Antrieb 21 verbunden. Diesem Antrieb 21 ist eine Steuereinheit 22 zugeordnet. Entsprechend sind Leitungen 24' bzw. 24'' und 24''' mit dem Antrieb 21 und der Steuereinheit 22 verbunden.

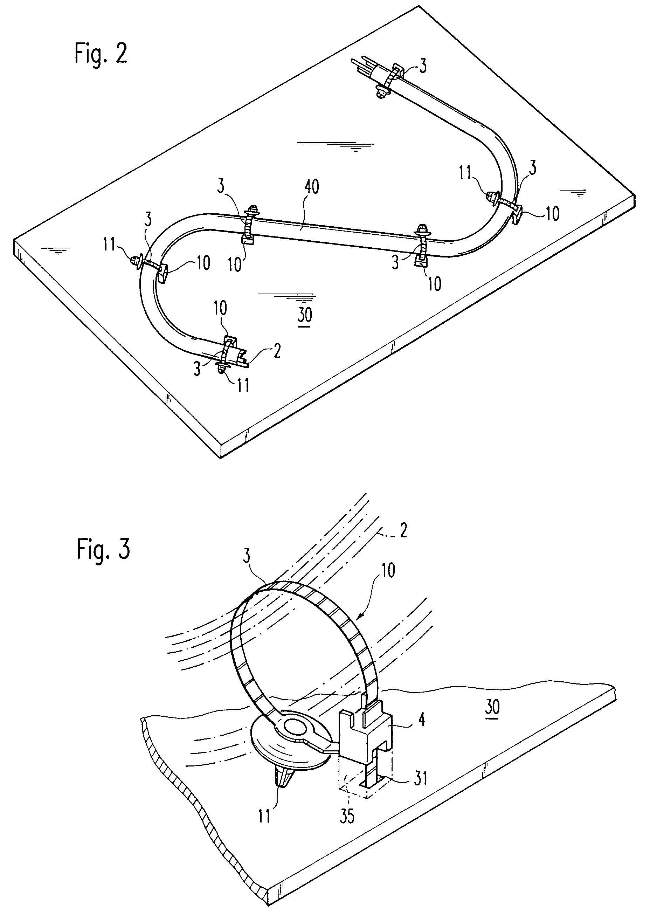

Gemäß Fig. 1 kann die Montageplatte 30 eine Anzahl der vorgenannten Durchtrittsöffnungen 31, 31', 31'' und 31''' aufweisen, welche nach Fig. 2 so angeordnet sind, daß sich bereits auf der Montageplatte 30 der gewünschte Verlauf eines Kabelstranges 40 ergibt.

Die entsprechenden Bandelemente 3 der jeweiligen Kabelhalter 10 werden um die rohrförmigen Körper 2 geschlungen, wonach jeweils der vordere Bereich des Bandelements 3 in die jeweilige Durchtrittsöffnung 31, 31' bzw. 31'' bzw. 31''' gesteckt wird. Über nicht näher dargestellte Sensoren wird nun der Antrieb 21 beispielsweise der unteren Walze 17 des Walzenpaares 16 und 17 eingeschaltet, wodurch die jeweiligen Bandelemente 3 in die Spannvorrichtungen 20, 20', 20'', 20''' eingezogen werden und damit mit Hilfe an sich bekannter Elemente so fest um den rohrförmigen Körper geschlungen werden, daß dieser einwandfrei umfaßt wird.

Die Platte 30 kann z.B. weitere Öffnungen zum Einlagern von Befestigungsbereichen 11 des jeweiligen Kabelhalters 10 aufweisen, um diesen dicht an die jeweilige Spannvorrichtung heranzuführen.

Danach wird über einen nicht näher dargestellten Schneidhebel innerhalb der jeweiligen Spannvorrichtung 20 etc. das überstehende Bandelement 3 abgeschnitten. Nunmehr kann der gesamte Kabel-strang 40 aus der Montageplatte 30 abgehoben werden, wobei sich die entsprechenden Bandelemente 3 bereits in der funktionsrichtigen Position befinden, in welcher beispielsweise in einem Kraftfahrzeug Öffnungen zur Aufnahme des jeweiligen Befestigungsbereichs 11 (Fig. 3) des Kabelhalters 10 vorliegen.

Um die Montage zu vereinfachen, besteht nach Fig. 1 die Möglichkeit, daß vorderseitig der Montageplatte bei einem Kabelband 10, welches den Befestigungsbereich 11 aufweist, ein Abstandshalter 35 angeordnet ist, wodurch genügend Zwischenraum vorhanden ist, um das Befestigungselement 11 während des Umschlingungsvorganges nicht zu beschädigen.

Die Montageplatte 30 kann eine Anzahl von Durchtrittsöffnungen aufweisen, welche entsprechend dem Verlauf der unterschiedlichen Kabelstränge angepaßt sind. Die Spannvorrichtungen 20, 20', 20'' und 20''' können über die Halter 25, 25', 25'' und 25''' lösbar an der Rückseite der Montageplatte 30 angeordnet sein. Hierdurch ist es möglich, dieselbe Montageplatte 30 zu verwenden und zwar auch dann, wenn unterschiedliche Kabelstränge 40 von den Kabelbändern 10 umschlungen werden müssen.

Die Spannvorrichtungen 20, 20', 20'' und 20''' werden entsprechend an den Haltern befestigt, so daß in jedem Fall der gewünschte Kabelverlauf auf maschinelle Weise durch gleichzeitige und gemeinsame Betätigung der betreffenden Spannvorrichtungen 20, 20', 20'' und 20''' mit Hilfe des Antriebs 21 und der Steuereinheit 22 bewirkt wird.

Durch die vorliegende Erfindung ist es möglich, eine Anzahl an sich bekannter Spannvorrichtungen zu einer Einheit 1 zusammenzufassen, welche den manuellen Arbeitsvorgang zum Herstellen eines Kabelstranges 40 mit an ganz bestimmten Befestigungspunkten vorgesehenen Kabelbändern 10 entbehrlich macht.

## Patentansprüche

1. Einrichtung zum Spannen eines um mindestens einen rohrförmigen Körper (2) geschlungenen, profilierten Bandelements (3), insbesondere eines Kabelhalters (10), in einem Kopfteil (4), in welchem ein mit dem profilierten Bandelement (3) zusammenwirkendes, federndes Verriegelungselement angeordnet ist, mit mindestens einer Spannvorrichtung (20) mit Schiebeschlitten und Schneidhebel,
**dadurch gekennzeichnet,**
daß die Spannvorrichtung (20) rückseitig an einer Montageplatte (30) angeordnet ist,
daß die Montageplatte (30) eine der Spannvorrichtung (20) zugeordnete Durchtrittsöffnung (31) für ein vorderseitig einzuführendes Bandelement (3) aufweist,
daß zwischen der Rückseite der Montageplatte (30) und einem Eintrittsbereich der Spannvorrichtung (20) mindestens ein bewegliches Einzugselement (15) zum Erfassen und Transportieren des Bandelements (3) angeordnet ist und
daß das Einzugselement (15) und ein Betätigungsteil für die Spannvorrichtung (3) mit mindestens einem Antrieb (21) und einer Steuereinheit (22) verbunden sind.

2. Einrichtung nach Anspruch 1,
dadurch gekennzeichnet,
daß rückseitig der Montageplatte (30) mehrere Spannvorrichtungen (20, 20', 20'', 20''') angeordnet sind, deren zugeordnete Durchtrittsöffnungen (31, 31', 31'', 31''') dem Verlauf eines insbesondere in einem Kraftfahrzeug zu montierenden Kabelstranges (40) entsprechen.

3. Einrichtung nach Anspruch 1 und 3,
dadurch gekennzeichnet,
daß die Spannvorrichtungen (20, 20', 20'', 20''') mit einem gemeinsamen Antrieb (21) und einer gemeinsamen Steuereinheit (22) verbunden sind.

4. Einrichtung nach Anspruch 1,
gekennzeichnet durch
ein Walzenpaar als Einzugselement (15).

5. Einrichtung nach Anspruch 1 und 4,
dadurch gekennzeichnet,
daß mindestens eine Walze des Walzenpaares zum Einziehen des Bandelements (3) in die Spannvorrichtung (20) mit dem Antrieb (21) verbunden ist.

6. Einrichtung nach einem der vorhergehenden Ansprüche,
dadurch gekennzeichnet,
daß die Montageplatte (30) mehrere Durchtrittsöffnungen (31, 31', 31'', 31''') für die jeweiligen Bandelemente (3) entsprechend dem Verlauf der verschiedenen Kabelstränge (40) aufweist.

7. Einrichtung nach einem der vorhergehenden Ansprüche,
dadurch gekennzeichnet,
daß die Spannvorrichtungen (20, 20', 20'', 20''') lösbar an der Rückseite der Montageplatte (30) angeordnet sind.

8. Einrichtung nach Anspruch 6 und 7,
dadurch gekennzeichnet,
daß jeder Durchtrittsöffnung (31, 31', 31'', 31''') rückseitig eine Halterung (25, 25', 25'', 25''') für eine Spannvorrichtung (20, 20', 20'', 20''') zugeordnet ist.

9. Einrichtung nach einem der vorhergehenden Ansprüche, für ein Kabelband (10), welches einen mit einem Träger verbindbaren Befestigungsbereich (11) aufweist,
dadurch gekennzeichnet,
daß jeder Durchtrittsöffnung (31, 31', 31'', 31''') ein Abstandshalter (35) vorgeordnet ist.

10. Einrichtung nach einem der vorhergehenden Ansprüche,
dadurch gekennzeichnet,
daß durch mindestens einen Sensor im Bereich der angetriebenen Walze des Walzenpaares der Antrieb zum Einziehen des Bandelements (3) in die Spannvorrichtung steuerbar ist.
